# EUROPEAN PATENT APPLICATION

(11) **EP 1 406 334 A1**
(43) Date of publication of application: **07.04.2004**
(21) Application number: 02722914.5
(22) Date of filing: 30.04.2002
(51) Int. Cl.: H01M 8/18

(54) **CELL FRAME FOR REDOX−FLOW CELL AND REDOX−FLOW CELL**

(30) Priority: 12.06.2001 JP 2001177203
(71) Applicant: Sumitomo Electric Industries, Ltd., Osaka-shi, Osaka 541-0041 (JP); THE KANSAI ELECTRIC POWER CO., INC., Osaka-shi, Osaka 530-8270 (JP)
(72) Inventor: AKAISHI, H., Osaka Works Sumitomo Elec. Ind. Ltd, Osaka-shi, Osaka 554-0024 (JP); KANNO, T., Osaka Works Sumitomo Electr. Ind. Ltd., Osaka-shi, Osaka 554-0024 (JP); OGINO, S., Osaka Works Sumitomo Electr. Ind. Ltd., Osaka-shi, Osaka 554-0024 (JP); ITO, T., Osaka Works Sumitomo Electr. Ind. Ltd., Osaka-shi, Osaka 554-0024 (JP); SHIGEMATSU, T, Osaka Works Sumitomo El. Ind Ltd., Osaka-shi, Osaka 554-0024 (JP); TOKUDA, N., The Kansai Electric Power Co., Inc., Osaka-shi, Osaka 530-8270 (JP)
(74) Representative: Cross, Rupert Edward Blount
(86) International application number: PCT/JP2002/004347
(87) International publication number: WO 2002/101862

(57) **Abstract**

This invention provides a cell frame for a redox flow battery that can provide an excellent seal between a frame and a bipolar plate, and a redox flow battery using the same. The cell frame for redox flow battery comprises the bipolar plate 9 and the frame 2A fitted around a periphery of the bipolar plate 9. The frame 2A comprises at least 50 mass% of vinyl chloride, and the bipolar plate is formed of conductive plastic comprising 40-90 mass% of graphite and 10-60 mass% of chlorinated organic compound.

## Description

### Technical Field

The present invention relates to a cell frame for a redox flow battery and to a redox flow battery using the same. Particularly, the present invention relates to a cell stack having an excellent seal between a frame and a bipolar plate.

### Background Art

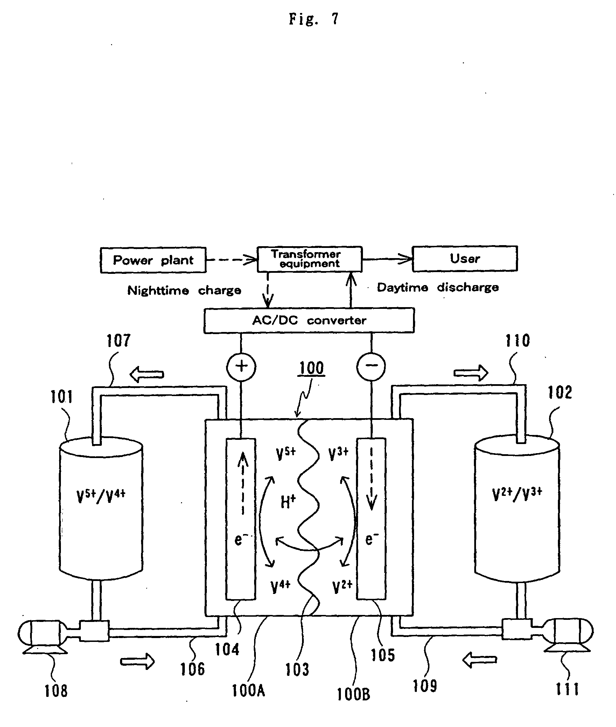

FIG. 7 is an explanatory view showing an operating principle of a conventional redox flow secondary battery. As illustrated therein, the redox flow battery has a cell 100 separated into a positive electrode cell 100A and a negative electrode cell 100B by a membrane 103 that can allow ions to pass through. The positive electrode cell 100A and the negative electrode cell 100B include a positive electrode 104 and a negative electrode 105, respectively. A positive electrode tank 101 for feeding and discharging positive electrolytic solution to and from the positive electrode cell 100A is connected to the positive electrode cell 100A through conduit pipes 106, 107. Similarly, a negative electrode tank 102 for feeding and discharging negative electrolytic solution to and from the negative electrode cell 100B is connected to the negative electrode cell 100B through conduit pipes 109, 110. Aqueous solution containing ions that change in valence, such as vanadium ion, is used for the positive and negative electrolytes. The electrolyte containing the ions is circulated by using pumps 108, 111, to charge and discharge the electrolyte with the change in ionic valence at the positive and negative electrodes 104, 105.

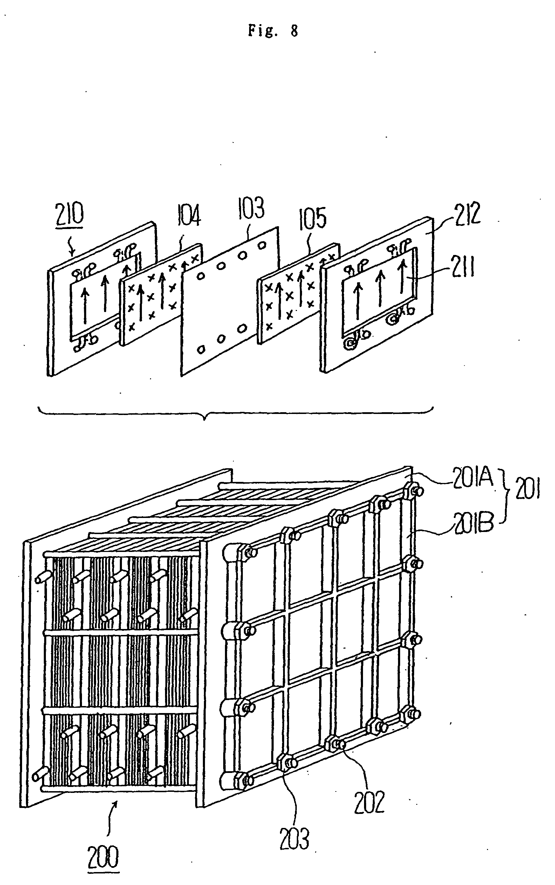

FIG. 8 is a diagrammatic illustration of construction of a cell stack used for the redox flow battery mentioned above. This type of battery usually uses the construction which is called a cell stack 200 comprising a plurality of cells stacked in layers. Each cell has the positive electrode 104 and the negative electrode 105 which are formed of carbon felt and disposed at both sides of the membrane 103. It also has cell frames 210 disposed at the outside of the positive electrode 104 and at the outside of the negative electrode 105, respectively.

Each of the cell frames 210 comprises plastic frames 212 and a bipolar plate 211 of carbon plastic fixed on the insides of the frames 212. In general, the each cell frame 210 is formed in such a manner that a pair of frame members are prepared and joined together to form the frame 212 and also an outer periphery of the bipolar plate 211 is sandwiched between inner peripheries of the frame members. The positive electrode 104 and the negative electrode 105 are adhesively bonded to their respective bipolar plates 211.

The stack body comprising the cell frames 210 and the electrodes 104, 105 has end plates 201 arranged at both sides thereof. The end plates 201 are clamped onto both sides of the stack body by tightening nuts 203 screwably engaged with end portions of a plurality of rod-like members 202 piercing the both end plates 201. Commonly used as the end plate 201 is a reinforced plate of a latticed frame 201B integrally formed on a rectangular plate 201A.

However, the conventional cell frame thus constructed leaves much room for studies for improvement on material of the frame and of the bipolar plate, an integrating method thereof or a mechanically reinforcing method thereof, and further improvement for the seal between the frames and the bipolar plate is being desired. When a fully integrated bipolar plate with the frames is realized with a higher reliability, the positive electrolyte and the negative electrolyte on both sides of the bipolar plate can be prevented from being mixed through the bipolar plate, thus producing improved battery efficiencies.

Accordingly, it is a primary object of the present invention to provide a cell frame for a redox flow battery that can provide an excellent seal between the frames and the bipolar plate, and a redox flow battery using the same cell frame.

### Disclosure of the Invention

The present invention provides a novel cell frame for a redox flow battery comprising a bipolar plate and a frame fitted around a periphery of the bipolar plate, wherein the frame comprises not less than 50 mass% of vinyl chloride, and the bipolar plate is formed of conductive plastic comprising 10-80 mass% of graphite and 10-60 mass% of chlorinated organic compound.

By specifying the composition of the material of the frame and of the bipolar plate as noted above, the frame and the bipolar plate can be bonded to each other with improved adhesion, thus producing a cell frame that can provide a further improved seal.

Vinyl chloride has excellent acid resistance and fusion bonding property, so it is preferably used as a material of the frame that is placed in contact with the electrolyte and is integrated with the bipolar plate. The frame comprising not less than 50 mass% of vinyl chloride can take advantage of the excellent acid resistance and fusion bonding property of vinyl chloride.

Thermoplastic resin is preferably used as other component mixed with vinyl chloride. The thermoplastic resins that may be used include, for example, polyethylene, polypropylene, and acrylonitrile-butadiene-styrene copolymer (ABS).

Injection molding is preferable for molding vinyl chloride into a complex shape, facilitating the form of the frame having a complex shape.

The bipolar plate is required to be electrically conductive with the positive electrode and the negative electrode arranged at both sides of the bipolar plate. Accordingly, in the present invention, the bipolar plate contains graphite. When containing more graphite, the bipolar plate reduces in electrical resistance, thus providing excellent electrical conductivity, while on the other hand, when the content of graphite is over an upper limit, sufficient adhesion between the bipolar plate and the frame cannot be obtained. Also, when the content of graphite is below a lower limit, sufficient electrical conductivity cannot be obtained.

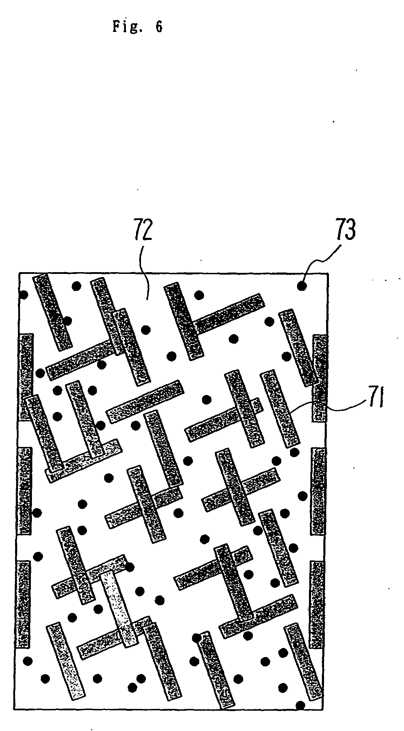

When examined microscopically, the bipolar plate has the composition of a large number of fragments of graphite 71 being dispersed in chlorinated organic compound 72, as roughly shown in FIG. 6. While the electrical conductivity of the bipolar plate basically originates from the graphite 71, carbon black 73 may be substituted for part of graphite 71. The constitution containing both the graphite 71 and the carbon black 73 is further preferable in that conduction of electricity between dispersed graphite 71 fragments can be provided by particles of carbon black 73. A quantity of carbon black substituted is preferable in the range of 5-30 mass%. Further, it is preferable that the carbon black has an average particle diameter in the range of 10⁻⁵ to 10⁻³mm. Further, as an alternative to carbon black or in combination with carbon black, diamond-like carbon may be added.

Also, the bipolar plate is required to have acid resistance because it is placed in contact with the electrolyte. The bipolar plate is also required to have a certain level of flexibility because it is subjected to stress accompanied by clamping force or thermal expansion and contraction of the cell stack formed. From a comprehensive viewpoint of the acid resistance, flexibility, and adhesion to vinyl chloride, the bipolar plate preferably contains 10-60 mass% of chlorinated organic compound. When a content of chlorinated organic compound is below a lower limit mentioned above, there arise following problems: ① sufficient adhesion of the bipolar plate to the frame is not obtained, ② the bipolar plate becomes so porous that it becomes hard to prevent mixture of the positive electrolyte and negative electrode across the bipolar plate, and ③ it becomes hard to form the bipolar plate by the molding process. On the other hand, when a content of chlorinated organic compound is over an upper limit mentioned above, the resistance is excessively increased. The chlorinated organic compounds that may be used including, for example, vinyl chloride, chlorinated polyethylene, and chlorinated paraffin.

In addition, auxiliary additives, such as processing aid, reinforcing agent, heat stabilizer, light stabilizer and age resister, is preferably added to the bipolar plate, if necessary.

It is preferable that the frame and the bipolar plate are integrated with each other by fusion bonding. The fusion bonding includes the fusion bonding by heat and the fusion bonding by solvent. In the fusion bonding by heat, for example, a pair of frame members are previously prepared and bonding parts of the frame members and the bipolar plate are fused by heating, thereby bonding them together. In the fusion bonding by solvent, for example, a pair of frame members are previously prepared and solvent is applied to bonding parts of the frame members and the bipolar plate, so that the frames and the bipolar plate are bonded together by the solvent. The solvents that may be used include, for example, tetrahydrofuran. The use of the solvent can provide the advantage of eliminating the need to use the adhesive, thus eliminating a possible problem that the adhesive may be swollen by the electrolyte to clog the guide groove.

It is also preferable that the frame is molded into one piece by the injection molding using the bipolar plate as a core. In this method using the injection molding, there is no need to bond a pair of frame members together, thus providing the advantage that the cell frame can be produced effectively.

It is preferable that a reinforcing sheet is laid on a boundary between the frame and the bipolar plate. In the case of the cell stack formed by the cell frames being stacked in layers, the cell stack is thermally expanded and contracted during operation, so that the bipolar plate is subjected to stress. When the flex resulting from the thermal expansion and contraction is repeatedly applied to a boundary portion of the bipolar plate with the frame, there is a fear that the bipolar plate may be damaged. The reinforcing sheet serves to protect the bipolar plate from the damage.

Further, some regions of the bipolar plate in the vicinity of an inner periphery of the frame are not in contact with the electrode. When oxidation-reduction reaction of the electrolytes is generated in those regions, the bipolar plate gets involved with the oxidation-reduction reaction, to cause deterioration of battery efficiency and deterioration of bipolar plate. Therefore, it is preferable that the reinforcing sheet has a size to cover the regions of the bipolar plate in the vicinity of the inner periphery of the frame that are not in contact with the electrode.

A variety of materials may be used for the reinforcing sheet, as long as they have acid resistance and strength capable of reinforcing the bipolar plate. For example, vinyl chloride may be used for the reinforcing sheet. It is preferable that the reinforcing sheet has thickness of 0.5mm or less, because when the reinforcing sheet has thickness in excess of 0.5mm, the flex of the bipolar plate is easily generated in the boundary between the reinforcing sheet and the bipolar plate.

Further, the redox flow battery of the present invention is characterized in that it comprises a cell stack of the cell frames mentioned above, the electrodes and the membranes being stacked in layers.

The cell stack may have the same stack structure as the conventional cell stack. That is to say, the cell stack is formed by the cell frame, the positive electrode, the membrane, the negative electrode and the cell frame being repeatedly stacked in sequence. Then, an electrical terminal for taking out electricity, a feed and discharge plate for feeding and discharging the electrolyte, and an end plate are arranged at each end of the cell stack. Then, the end plates are clamped onto both sides of the stack body to hold the cell stack. While the bipolar plate and the electrodes are generally bonded to each other with adhesive, the cell stack may be formed by holding the stack body by only the clamping force, without using any adhesive.

### Brief Description of the Drawings

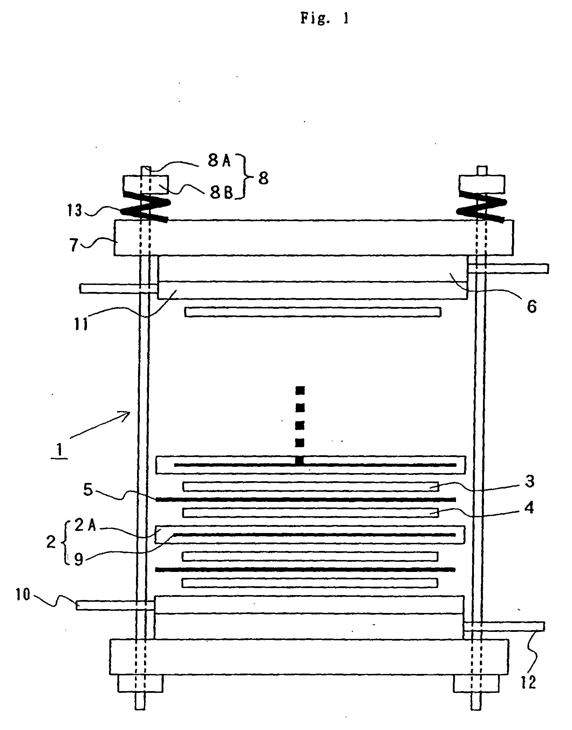

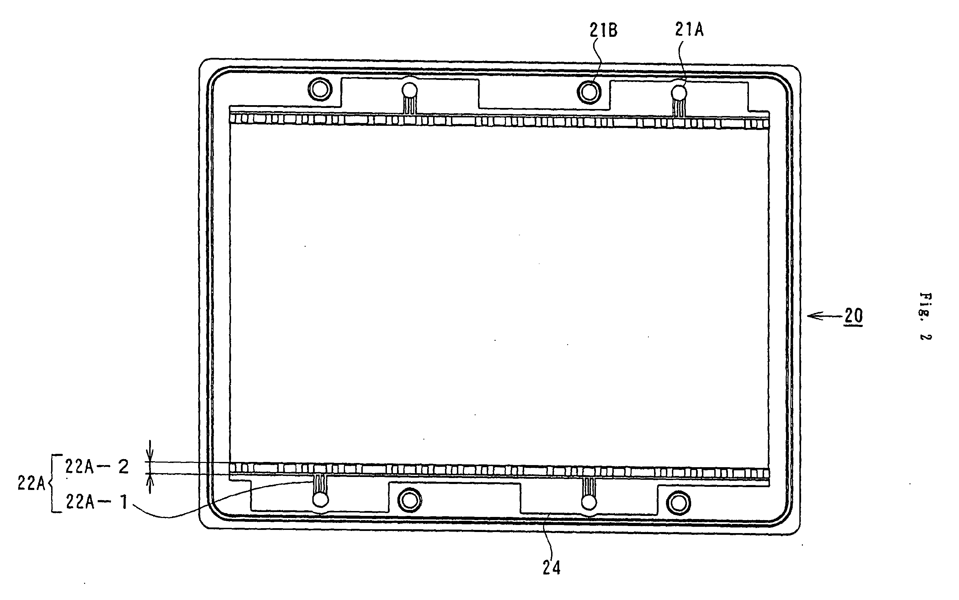

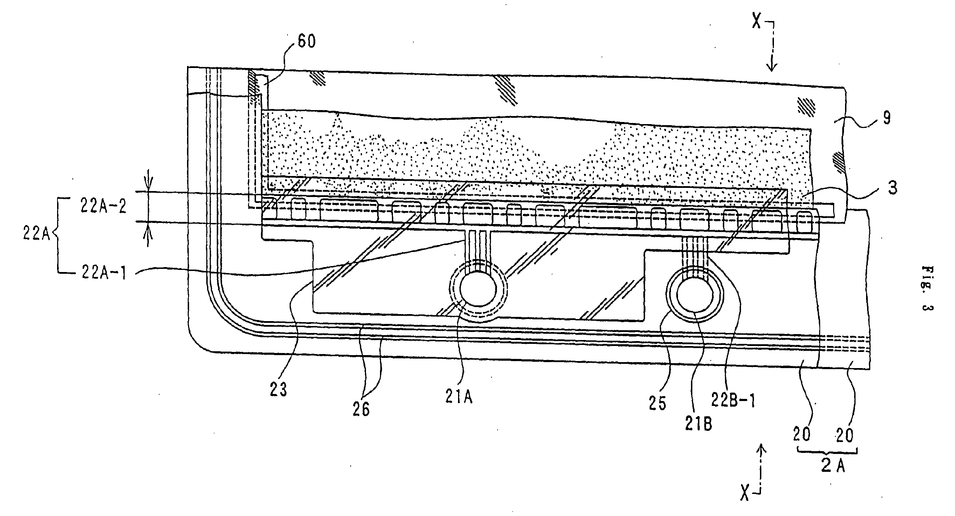

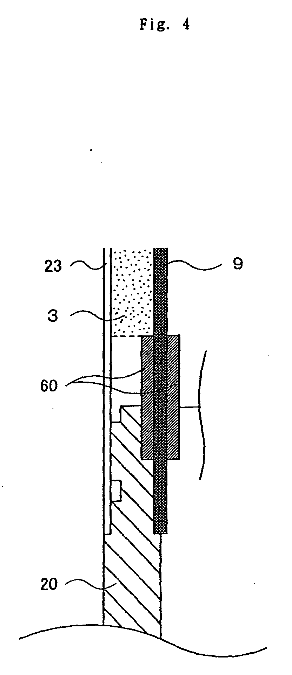

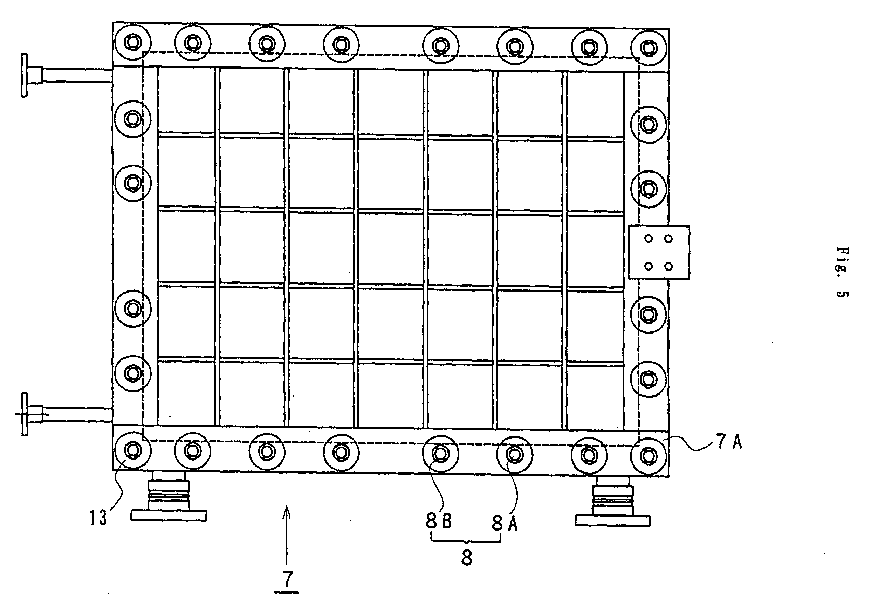

FIG. 1 is a diagrammatic illustration of construction of a cell stack of the present invention. FIG. 2 is a plan view of a frame member used for a cell stack of the present invention. FIG. 3 is a plan view showing a combined state of a cell frame and an electrode used for the cell stack of the present invention. FIG. 4 is a sectional view taken along line X-X of FIG. 3. FIG. 5 is a plan view of an end plate. FIG. 6 is a schematic diagram of a composition of the bipolar plate. FIG. 7 is an explanatory view of an operating principle of the redox flow battery. FIG. 8 is an illustration of a conventional cell stack.

### Best Mode for Carrying out the Invention

In the following, certain preferred embodiments of the present invention are described.

### (Overall construction)

Referring to FIG. 1, there is shown a diagrammatic illustration of construction of a cell stack used in a redox flow battery system of the present invention, when viewed from the top. As illustrated, the cell stack 1 has the construction wherein cell frames 2, electrodes 3, 4 and membranes 5 are stacked in layers to form a stack body and also feed/discharge plates 6 and end plates 7 are arranged at both ends of the stack body and are clamped onto both sides of the stack body by a clamping mechanism 8. An operating principle of a redox flow battery using the cell stack 1 is the same as that outlined with reference to FIG. 7. The electrolytes are circulated from tanks to the positive electrode 3 and the negative electrode 4, respectively, as in the same manner as conventional. The cell stack 1 is installed on the ground via a support base, not illustrated. The support base may be formed by an insulator set to isolate the cell stack from the ground.

### (Cell frame)

The cell frame 2 comprises a frame 2A and a bipolar plate 9 fixed on an inside of the frame 2A.

The frame 2A is a frame member formed of plastic containing vinyl chloride as a major component. On the other hand, the bipolar plate 9 is a rectangular plate formed of conductive plastic carbon containing graphite. There are two methods of integrating the frame 2A and the bipolar plate 9. ① One method is that two frame members produced in an injection molding and the like are prepared and joined together to form the frame 2A and also an outer periphery of the bipolar plate 9 is sandwiched between inner peripheries of the both frame members. ② Another one is that the frame 2A is formed in the injection molding using the bipolar plate 9 as a core. In this embodiment, the cell frame 2 is formed by the former method.

Referring to FIG. 2, there is shown a plan view of the frame member. The frame member 20 has a plurality of manifolds 21A, 21B formed in its long sides. The manifolds 21A, 21B are arranged to form flow channels of the electrolytic solutions extending in a stacking direction of the cell frames when a number of cell frames are stacked in layers. In the illustrated embodiment, the manifolds arranged along the long side of the frame member 20 are alternately used as a positive electrolyte manifold 21A and a negative electrolyte manifold 21B.

The frame member 20 has, on a front side thereof, a circulation portion 22A of the electrolyte. The circulation portion 22A comprises a electrolyte guide groove 22A-1 extending from the manifold 21A and a rectifying portion 22A-2 for allowing the electrolyte fed from the guide groove 22A-1 to diffuse along an edge of the positive electrode. The rectifying portion 22A-2 is formed by rectangular projections and depressions formed along the long side of the frame member 20. The electrolyte is guided to the positive (negative) electrode through the depressions. The number and shape of the guide groove 22A-1 and of the rectifying portion 22A-2 are not limited to those illustrated in this embodiment.

The guide groove 22A-1 in one long side of the frame member 20 and the guide groove 22A-1 in the other long side thereof are arranged to be symmetrical with respect to a point. This arrangement can provide the advantage that the frame members 20 can all be formed into the same configuration or there is no need to prepare the frame members 20 having different configurations, because they can be combined with each other by simply changing orientation.

These frame members 20 are integrated with the bipolar plate in such a manner that after tetrahydrofuran is applied to bonding parts of the frame members 20 to the bipolar plate, the frame members 20 are bonded to each other, with a periphery of the bipolar plate sandwiched between the bonding parts around inner peripheries of the frame members. Shown in FIG. 3 is a partial plan view showing the state in which the electrodes are arranged in the cell frame formed by joining the frame members 20 together. Shown in FIG. 4 is a sectional view taken along line X-X of FIG. 3. It is preferable that a reinforcing sheet 60 is laid on a boundary between an inner end of the frame member 20 and the bipolar plate 9. The reinforcing sheet 60 is a frame-shaped sheet extending over the boundary between the inner end of the frame member 20 and the bipolar plate 9. It serves to protect the bipolar plate 9 from damage when the flex resulting from thermal expansion and contraction of the cell stack is repeatedly applied to a boundary portion of the bipolar plate with the frame. As shown in FIG. 4, the reinforcing sheet 60 is disposed on the bipolar plate 9, with about one-half thereof held between the bipolar plate 9 and the frame member 20. The positive electrode 3 is arranged substantially along an upper end of the reinforcing sheet, as illustrated (with the negative electrode side omitted). The cell frame may be formed, for example, in such a way that after the reinforcing sheet 60 is previously fixed to the periphery of the bipolar plate 9 by fusion bonding or solvent bonding, the frame member 20 is bonded to the reinforcing sheet 60, with its partly overlapped with the reinforcing sheet 60.

In this cell frame, the guide groove 22A-1 depicted by a solid line is formed on a front side of the frame 2A and the guide groove 22B-1 depicted by a broken line is formed on a back side of the frame 2A. In the illustration, the manifold on the left is the positive electrolyte manifold 21A. The positive electrolyte passing through the guide groove 22A-1 indicated by the solid line from this positive electrolyte manifold is guided to the positive electrode 3 disposed on the front side of the bipolar plate 9. On the other hand, the manifold on the right is the negative electrolyte manifold 21B. The negative electrolyte passing through the guide groove 22B-1 indicated by the broken line from this negative electrolyte manifold is guided to the negative electrode (not shown) disposed on the back side of the bipolar plate 9.

The guide groove 22A-1 and the rectifying portion 22A-2 are covered with a plastic protection plate 23. The protection plate 23 has a circular hole formed in a position corresponding to the manifold 21A and also has a size to cover an entire area of the guide groove 22A-1 and the rectifying portion 22A-2 and an area extended slightly upwardly from the rectifying portion 22A-2. In the cell stack 1 formed (FIG. 1), the membranes 5 (FIG. 1) are arranged on both sides of the cell frame 2 (FIG. 1). The protection plate 23 is used for protecting the thin membrane 5 from tear or damage caused by contact with the projections and depressions of the guide groove 22A-1 and rectifying portion 22A-2. Also, the protection plate 23 is made of sufficient size to cover the area extended slightly upwardly from the rectifying portion 22A-1 as well, for the purpose of providing the function as a holder to hold upper and lower end portions of the positive electrode 3 (negative electrode 4) between the protection plate 23 and the bipolar plate 9, to thereby produce improved assembling workability. The protection plate 23 has thickness of the order of about 0.1-0.3mm. The frame 2A has a recessed portion 24 formed into a corresponding shape to the periphery of the protection plate 23 in the position where the protection plate 23 is mounted (See FIG. 2), thus facilitating the alignment of the protection plate 23.

O-rings to seal the respective manifolds 21A, 21B and o-rings to prevent leakage of the electrolyte to the outside of the cell frames when the cell frame structures are stacked in layers are fitted in the circular grooves 25 formed around the manifolds and in frame grooves 26 formed along the outer periphery of the cell frame, respectively.

### (Electrode)

The positive electrode 3 and the negative electrode 4 are arranged on the front side and the back side of the bipolar plate 9, respectively. Usually, the positive (negative) electrode 3 is formed of the carbon felt and is formed to have a size corresponding to a rectangular space defined in the cell frame. It is usual that the positive (negative) electrode 3 is adhesively bonded to the bipolar plate 9, but, in this embodiment, the form of the cell stack is held by a tightening force of a clamping mechanism mentioned later without using any adhesive.

### (Membrane)

An ion-exchange membrane is used for the membrane. It has thickness of the order of about 20-400 µm. Ion-exchange resin containing vinyl chloride, fluorocarbon resin, polyethylene, polypropylene and the like can be used as material of the membrane. The membrane has an area substantially equal to the cell frame and also has through holes formed in locations confronting the manifolds.

### (Electrical terminal)

The cell stack 1 has electrical terminals 10 disposed in the vicinity of both ends thereof for providing the charge/discharge operation as the redox flow battery. The cell stack 1 is formed by the cell frame 2, the positive electrode 3, the membrane 5, the negative electrode 4 and the cell frame 2 being repeatedly stacked in sequence, as shown in FIG. 1. The bipolar plates fixed in the interior of the cell frame 11 located at ends thereof are put into contact with the electrodes 3, 4 located at ends of the cell stack thus formed, and the electrical terminals 10 are drawn out from the cell frame 11 located at the ends of the cell stack.

### (Feed and discharge plate)

The feed and discharge plates 6 have the structure to connect the electrolyte tanks and the manifolds of the cell frames 2 so as to feed and discharge the electrolyte to and from the manifolds. Pipes 12 are fitted in the feed and discharge plates 6 and the pipes 12 are connected to the electrolytic tanks. The pipes 12 are connected to the manifolds of the cell frames 2 through the electrolyte flow channels in the feed and discharge plates 6. In this embodiment, the electrical terminals 10 and the pipes 12 are drawn out in the opposite direction from the cell stack 1 to make a distinction between a power line and a circulation line of the electrolyte, so as to facilitate a connecting work between the electrical terminals 10 and equipment and a connecting work between the pipes 12 and piping to the tanks. This arrangement is particularly desirable in that even when the electrolyte leaks from the pipes 12, the electrical terminals 10 are kept out of the leakage of the electrolyte.

### (End plate)

The end plates 7 are latticed plates for clamping onto both sides of the stack body comprising the cell frames 2, the electrodes 3, 4, the membranes 5 and the feed and discharge plates 6. A plan view of the end plate 7 is shown in FIG. 5. The lattice structure of the latticed plates is adopted to provide reduction in weight of the end plate 7. The end plates 7 each have a number of through holes formed around a periphery 7A thereof. After rod-like members 8A mentioned later are inserted in the through holes, nuts 8B are tightened, thereby holding the stack structure comprising the cell frames 2, the electrodes 3, 4, the membranes 5 and the feed and discharge plates 6 (See FIG. 1).

### (Clamping mechanism)

The clamping mechanism 8 serves to put the both end plates 7 into press-contact with both sides of the stack body to hold the stack body constructed as the cell stack 1, as shown in FIG. 1. The clamping mechanism 8 comprises rod-like members 8A inserted in the through holes of the end plates 7 and nuts 8B screwably engaged with the rod-like members 8A. Each rod-like member 8A has male threads formed at both ends thereof to be threadedly engaged with the nut 8B and an insulating coating formed by a thermal contraction tube at an intermediate portion thereof. When the stack body comprising the cell frames 2 and the electrodes 3, 4 is clamped with the rod-like members 8A, a number of rod-like members 8A are arranged in parallel around the outside of the stack body. Further, in this embodiment, coil springs 13 are disposed around end portions of the rod-like members 8A between the nuts 8B and the end plates 7, to absorb thermal expansion and contraction of the cell stack 1.

### (Example 1)

### <Frame>

Size
Outer size: 1,000mm wide, 800mm high, and 5mm thick,
Inner size: 900mm wide and 600mm high,
Seal groove: 3mm wide, 1mm deep, and 5mm in distance between grooves,
O-ring size: 1.5mm in diameter of cross-section of the ring, and 1,000mm in diameter,
Inner and outer seal grooves: Arranged at the same locations on both sides of the cell frame,
Ratio of diameter of manifold to total width of cell frame: 3%,
Ratio of distance between adjacent manifolds to total width of cell frame: 40%,
Cross-sectional area of guide groove: 5mm²,
Material: Resin comprising 50 mass% of vinyl chloride and 50 mass% of acrylonitrile-butadiene-styrene copolymer (ABS),
Reinforcing sheet: Vinyl chloride sheet of 0.3mm thick and 5mm wide bonded by solvent, and
Manufacturing process: Injection molding,

### <Bipolar plate>

Size: 0.3mm thick,
Material: 50 mass% of graphite, 10 mass% of carbon black, 29 mass% of chlorinated polyethylene, 5 mass% of vinyl chloride, 5 mass% of chlorinated paraffin, and 1 mass% in total of stabilizing agent and filler,

### <Electrode>

Material: Carbon felt,

### <Stack structure>

Total number of Cell frames: 100 in total (A set of stack body with 25 cell frames stacked in layers is temporarily held, and four sets of stack bodies, each being temporarily held, are stacked in layers),

### <Electrolyte>

Composition: Vanadium ion concentration: 2.0 mol/L, Free sulfuric acid concentration: 2.0 mol/L, and Added phosphoric acid concentration: 0.3 mol/L,
Quantity of electrolyte: 20m³,

### <Clamping mechanism>

Number of long bolts: 20,
Rate of spring of coil spring: 1,000N/m,
Active coils: 3.0,
Contraction from free length of coil spring when clamped: 30mm,

### <Results>

Battery efficiency: 86%,
Discharge possible power: 350kWH,
Others: It was found that the frames and the bipolar plate were integrated with each other so firmly that even when the cell stack was thermally contracted during operation, no problem occurred and no leakage of electrolyte from between the cell frames occurred, either.

### (Example 2)

Using the cells of the present invention, a different redox flow battery from that of Example 1 was produced, and battery performances and discharge possible power of that redox flow battery was measured. Differences in data on material, size, and others of the cell stack from those of Example 1 and measurement results are shown below.

### <Frame>

Size
Outer size: 1,000mm wide, 500mm high, and 4mm thick,
Inner size: 900mm wide and 300mm high,
Seal groove: 2mm wide, 1mm deep, and 10mm in distance between grooves,
O-ring size: 1.5mm in diameter of cross-section of the ring, and 750mm in diameter,
Inner and outer seal grooves: Arranged on both sides of the cell frame at the locations shifted 8mm away from each other,
Ratio of diameter of manifold to total width of cell frame: 2.0%,
Ratio of distance between adjacent manifolds to total width of cell frame: 30%,
Material: Resin comprising 90 mass% of vinyl chloride and 10 mass% of acrylonitrile-butadiene-styrene copolymer (ABS),
Reinforcing sheet: Vinyl chloride sheet of 0.5mm thick and 5mm wide bonded by solvent, and
Manufacturing process: Injection molding,

### <Bipolar plate>

Size: 0.1mm thick,
Material: 29 mass% of graphite, 13 mass% of carbon black, 31 mass% of chlorinated polyethylene, 13 mass% of vinyl chloride, 13 mass% of chlorinated paraffin, and 1 mass% in total of stabilizing agent and filler,

### <Stack structure>

Total number of cell frames: 75 in total (A set of stack body with 25 cell frames stacked in layers is temporarily held, and three sets of stack bodies, each being temporarily held, are stacked in layers),

### <Clamping mechanism>

Number of long bolts: 18,
Rate of spring of coil spring: 1,600N/m,
Active coils: 2.5,
Contraction from free length of coil spring when clamped: 15mm,

### <Results>

Battery efficiency: 87%,
Discharge possible power: 450kWH,
Others: It was found that the frames and the bipolar plate were integrated with each other so firmly that even when the cell stack was thermally contracted during operation, no problem occurred and no leakage of electrolyte from between the cell frames occurred, either.

### Capabilities of Exploitation in Industry

As discussed above, according to the present invention, the composition of the material of the frame and of the bipolar plate are specified, thereby providing a cell frame that can provide excellent seal between the frames and the bipolar plate. This can produce a highly reliable battery by stacking the cell frames in layers to form the redox flow battery.

## Claims

1. A cell frame for a redox flow battery comprising a bipolar plate and a frame fitted around a periphery of the bipolar plate,
wherein the frame comprises not less than 50 mass% of vinyl chloride, and the bipolar plate is formed of conductive plastic comprising 40-90 mass% of graphite and 10-60 mass% of chlorinated organic compound.

2. The cell frame for the redox flow battery according to Claim 1, wherein the bipolar plate comprises 5-30 mass% of carbon black substituted for part of the graphite.

3. The cell frame for the redox flow battery according to Claim 1, wherein the frame and the bipolar plate are integrated with each other by fusion bonding.

4. The cell frame for the redox flow battery according to Claim 1, wherein a reinforcing sheet is laid on a boundary between the frame and the bipolar plate.

5. The cell frame for the redox flow battery according to Claim 4, wherein the reinforcing sheet has thickness of 0.5mm or less.

6. A redox flow battery comprising a cell stack of cell frames of any of Claims 1 to 5, electrodes, and membranes being stacked in layers.
